# EUROPÄISCHE PATENTANMELDUNG

(11) **EP 1 235 165 A1**
(43) Veröffentlichungstag der Anmeldung: **28.08.2002**
(21) Anmeldenummer: 01103549.0
(22) Anmeldetag: 19.02.2001
(51) Int. Cl.: G06F 17/60, H04L 12/18

(54) **Verfahren und Computerprogramm zur Sicherung von Kursgewinnen**

(71) Anmelder: Stöver, Hermann & Partner GnbH, 28209 Bremen (DE)
(72) Erfinder: Stöver, Burghard, 28213 Bremen (DE)
(74) Vertreter: Winkler, Andreas, Dr.

(57) **Zusammenfassung**

Verfahren zur Sicherung von Kursgewinnen von Aktien- oder Wertpapieranlegern unter Verwendung eines Computers und Computerprogramm zur Durchführung desselben.

## Beschreibung

Die vorliegende Erfindung betrifft ein Verfahren und ein Computerprogramm zur Sicherung von Kursgewinnen. Als Gewinnmitnahmen werden Verkäufe von Aktien- bzw. Wertpapieranlegern bezeichnet, die nach einem Kursanstieg die erzielten Kursgewinne sichern, d. h. bei anschließendem Fallen der Kurse die bisherigen Buchgewinne durch Verkauf der Wertpapiere realisieren wollen.

Derzeit ist es bei Banken oder Brokern üblich, einen festen Stopp-Kurs, und das in der Regel auch noch zeitlich begrenzt, zu vereinbaren. Bei steigenden Aktien- bzw. Wertpapierkursen muß dieser permanent durch Eigeninitiative des Bank- bzw. Broker-Kunden (Aktien- bzw. Wertpapieranleger) oder durch jeweilige Rücksprache der Bank bzw. des Brokers mit dem Kunden angepaßt werden. Erfolgt keine Anpassung und fallen die Aktien- bzw. Wertpapierkurse wieder bis auf den (festen) Stopp-Kurs zurück, wird auch dann erst der Verkauf der Aktien- bzw. Wertpapiere ausgelöst. Dadurch bleiben zwischenzeitlich erreichte Buchgewinne unberücksichtigt.

Der vorliegenden Erfindung liegt somit die Aufgabe zugrunde, Kursgewinne ohne die Notwendigkeit der Rücksprache mit dem Kunden und ohne aufwendige Eigeninitiative des Kunden zum möglichst höchsten Kurs innerhalb einer Kurssteigerungsphase (Hausse) zu sichern.

Erfindungsgemäß wird diese Aufgabe gelöst durch ein Verfahren zur Sicherung von Kursgewinnen von Aktien- oder Wertpapieranlegern unter Verwendung eines Computers, das die folgenden Schritte umfaßt:
a) elektronisches Speichern eines ersten Stopp-Kurses für eine gekaufte Aktien- oder Wertpapiergattung und einer Schwankungstoleranz,
b) elektronisches Erfassen des Tageskurses der Aktien- bzw. Wertpapiergattung,
c) Vergleich des Tageskurses mit dem ersten Stopp-Kurs und,
   wenn der Tageskurs niedriger als oder genauso groß wie der erste Stopp-Kurs ist, nochmaliger Durchlauf beginnend mit Schritt b), anderenfalls
   a') elektronisches Speichern des Tageskurses als neuen Stopp-Kurs,
   b') elektronisches Erfassen des Tageskurses der Aktien- bzw. Wertpapiergattung,
   c') Vergleich des Tageskurses mit dem neuen Stopp-Kurs und,
      wenn der Tageskurs größer als der neue Stopp-Kurs ist, nochmaliger Durchlauf beginnend mit Schritte a') bis c'),
      wenn der Tageskurs niedriger als der neue Stopp-Kurs ist, aber innerhalb der Schwankungstoleranz liegt, Beibehalten des Stopp-Kurses und nochmaliger Durchlauf beginnend mit Schritt b'), und,
      wenn der Tageskurs kleiner als der neue Stopp-Kurs ist und nicht innerhalb der Schwankungstoleranz liegt, Ausgabe eines Hinweises zum Verkauf der Aktien- bzw. Wertpapiergattung.

Weiterhin wird diese Aufgabe gelöst durch ein Computerprogramm mit Programmcode-Mitteln, um ein Verfahren gemäß einem der Ansprüche 1 - 13 durchzuführen, wenn das Programm auf einem Computer ausgeführt wird.

Außerdem wird diese Aufgabe gelöst durch ein Computerprogramm mit Programmcode-Mitteln nach Anspruch 14, die auf einem computerlesbaren Datenträger gespeichert sind.

Bei dem Verfahren kann vorgesehen sein, daß die Schwankungstoleranz ein Absolutwert ist. Beispielsweise kann die Schwankungstoleranz 5 EUR betragen.

Alternativ kann vorgesehen sein, daß die Schwankungstoleranz ein Relativwert ist. So kann sie beispielsweise 5 % des ersten oder aktuellen Stopp-Kurses betragen.

Gemäß einer weiteren besonderen Ausführungsform der Erfindung kann vorgesehen sein, daß der Tageskurs über eine Tastatur eingegeben wird.

Alternativ kann auch vorgesehen sein, daß der Tageskurs von einem Datenträger eingelesen wird. Dabei kann es sich beispielsweise um eine Diskette, eine CD-ROM oder ein anderes digitales Speichermedium handeln.

Günstigerweise wird der Tageskurs über eine Datenfernübertragungseinrichtung oder einen Internet-Zugang eingelesen. Dabei kann die Datenfernübertragungseinrichtung oder das Internet direkt mit der Aktien- bzw. Wertpapierbörse verbunden sein, um die aktuellen Tageskurse abzurufen und weiter zu verarbeiten.

Vorteilhafterweise ist zusätzlich eine Spekulationsfrist elektronisch gespeichert und wird der Hinweis zum Verkauf der Aktien- bzw. Wertpapiergattung nur unter der zusätzlichen Bedingung, daß sich anhand eines Zeitvergleiches ein Ablauf der Spekulationsfrist ergeben hat, ausgegeben.

Andererseits kann auch vorgesehen sein, daß zusätzlich eine Spekulationsfrist und eine Größe, die die Beachtung bzw. Nichtbeachtung der Spekulationsfrist repräsentiert, elektronisch gespeichert werden und, wenn die Größe die Beachtung der Spekulationsfrist repräsentiert, der Hinweis zum Verkauf der Aktien- bzw. Wertpapiergattung nur unter der zusätzlichen Bedingung, daß sich anhand eines Zeitvergleiches ein Ablauf der Spekulationsfrist ergeben hat, ausgegeben wird. Letzteres bedeutet, daß der Kunde (Aktienbzw. Wertpapieranleger) auf die Einhaltung der Spekulationsfrist verzichten kann und dies durch Zuordnung eines entsprechenden Wertes für die vorgenannte Größe vermerkt und dadurch bei der weiteren Handhabung berücksichtigt werden kann.

Gemäß einer weiteren besonderen Ausführungform der Erfindung kann vorgesehen sein, daß der Hinweis zum Verkauf der Aktien- bzw. Wertpapiergattung per Telefax oder per E-Mail über das Internet an den Aktien- bzw. Wertpapieranleger ausgegeben wird.

Dabei kann vorgesehen sein, daß gleichzeitig mit dem Hinweis zum Verkauf der Aktien- bzw. Wertpapiergattung ein vorgefertigter Verkaufsauftrag an eine Bank bzw. Fondgesellschaft über einen Drucker ausgewiesen wird. Dies erleichtert und beschleunigt den Verkauf der Aktien- bzw. Wertpapiergattung.

Außerdem kann dabei vorgesehen sein, daß gleichzeitig mit dem Hinweis zum Verkauf der Aktien- bzw. Wertpapiergattung eine schriftliche Vereinbarung zwischen dem Aktien- bzw. Wertpapieranleger und einer Anlageberaterfirma ausgegeben wird.

Günstigerweise wird gleichzeitig mit dem Hinweis zum Verkauf der Aktien- bzw. Wertpapiergattung eine schriftliche Honorarvereinbarung zwischen dem Aktien- bzw. Wertpapieranleger und der Anlageberaterfirma ausgegeben.

Schließlich kann gemäß einer weiteren besonderen Ausführungsform der Erfindung vorgesehen sein, daß zusätzlich eine Tageskursuntergrenze elektronisch gespeichert wird und in dem Schritt c) zusätzlich ein Vergleich des Tageskurses mit der Tageskursuntergrenze durchgeführt und, wenn der Tageskurs kleiner als die Tageskursuntergrenze ist, ein Hinweis zum Notverkauf der Aktien- bzw. Wertpapiergattung ausgegeben wird. Auch wenn beim Aktien- bzw. Wertpapierkauf vom unmittelbaren, zumindest aber vom langfristigen Anstieg des Kurses ausgegangen wird, besteht dennoch die Möglichkeit, daß der Kurs entgegen allen Entwartungen unaufhaltsam fällt. Eine Tageskursuntergrenze bietet dann die Möglichkeit, den Kursverlust relativ gering zu halten.

Der Erfindung liegt die überraschende Erkenntnis zugrunde, daß durch die besondere Tageskursüberwachung und -auswertung Rücksprachen mit dem Aktien- bzw. Wertpapieranleger bzw. eine aufwendige Eigeninitiative desselben nicht erforderlich sind.

Weitere Merkmale und Vorteile der Erfindung ergeben sich aus den Ansprüchen und aus der nachstehenden Beschreibung, in der ein Ausführungsbeispiel anhand der schematischen Zeichnung im einzelnen erläutert ist.

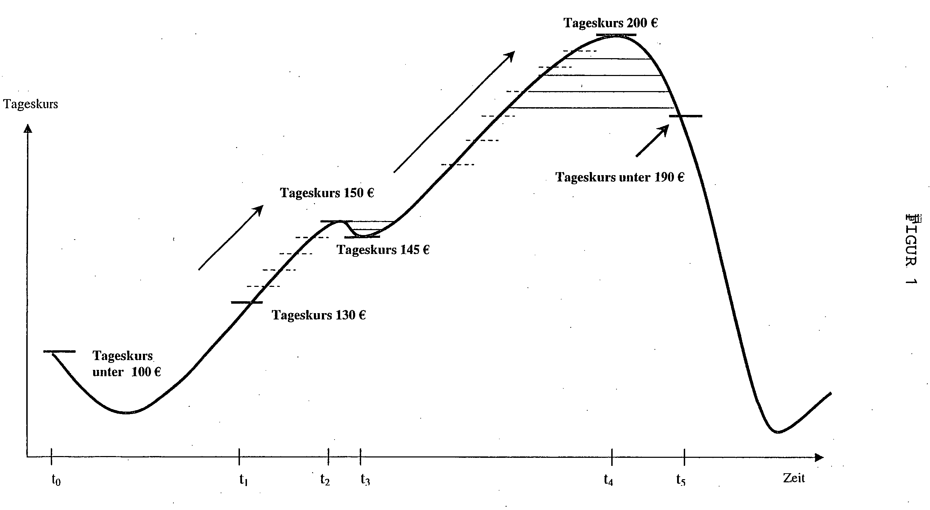

Figur 1 zeigt den Ablauf einer besonderen Ausführungsform des erfindungsgemäßen Verfahrens anhand der Entwicklung des Kurses für eine Aktien- bzw. Wertpapiergattung. Nach rechts ist die Zeit und nach oben der Tageskurs für eine Aktien- bzw. Wertpapiergattung aufgetragen. Zu einem Zeitpunkt t₀ wird eine Aktien- bzw. Wertpapiergattung zu einem Tageskurs von beispielsweise 100 EUR über eine Anlageberaterfirma für einen Kunden (Aktien- bzw. Wertpapieranleger) gekauft. Mit dem Kunden wurde dabei ein erster Stopp-Kurs in Höhe von 130 EUR vereinbart. Nach dem Kauf fällt der Tageskurs beispielsweise zunächst einmal, bis daß er wieder ansteigt. Zum Zeitpunkt t₁ hat der Tageskurs den ersten Stopp-Kurs erreicht. In der nachfolgenden Zeit steigt er weiter an, so daß statt des ersten Stopp-Kurses ein neuer Stopp-Kurs verwendet wird, der jeweils dem Tageskurs des vorangehenden Tages entspricht. Zum Zeitpunkt t₂ erreicht der Tageskurs seinen vorerst höchsten Wert (150 EUR). Danach, d. h. zum Zeitpunkt t₃ fällt er auf 145 EUR ab. Da als Schwankungstoleranz 5 % des ersten Stopp-Kurses, d. h. 6,5 EUR vom Kunden vorgegeben wurden, liegt die Änderung, d. h. 5 EUR, noch innerhalb der Schwankungstoleranz, so daß der neue Stopp-Kurs nicht an den neuen Tageskurs (145 EUR) angepaßt wird, sondern auf 150 EUR bleibt. Danach steigt der Tageskurs wieder stetig bis zum Zeitpunkt t₄ an. Demzufolge wird auch der neue Stopp-Kurs immer an den Tageskurs des vorangehenden Tages angepaßt. Nach dem Zeitpunkt t₄ fällt der Tageskurs von 200 EUR auf unter 190 EUR zum Zeitpunkt t₅ ab. Da der letzte neue Stopp-Kurs bei 200 EUR liegt, ist nunmehr die Schwankungstoleranz in Höhe von 5 % des aktuellen Stopp-Kurses, d. h. 10 EUR, und zwar unabhängig von der Zeit, innerhalb derer dies geschieht, überschritten, so daß ein Hinweis zum Verkauf der Aktien- bzw. Wertpapiergattung ausgegeben wird.

Das vorangehend beschriebene Verfahren zur Sicherung von Kursgewinnen von Aktien- oder Wertpapieranlegern wurde ohne Bezugnahme auf einen Computer beschrieben. Die Verwendung eines Computers weist die Vorzüge auf, daß das Verfahren automatisch durchgeführt wird, insbesondere wenn auch das elektronische Erfassen der Tageskurse automatisch erfolgt. In der einfachsten Form weist der Computer eine Einrichtung zum elektronischen Speichern eines ersten Stopp-Kurses für eine gekaufte Aktien- oder Wertpapiergattung und einer Schwankungstoleranz, eine Einrichtung zum elektronischen Erfassen des Tageskurses der Aktien- bzw. Wertpapiergattung, eine Einrichtung zum Vergleichen des Tageskurses mit dem ersten Stopp-Kurs und eine Einrichtung zur Ausgabe eines Hinweises zum Verkauf der Aktien- bzw. Wertpapiergattung auf. Der Computer wird mittels eines Computerprogramms derart betrieben, daß er in der Einrichtung zum elektronischen Speichern einen ersten Stopp-Kurs für eine gekaufte Aktien- bzw. Wertpapiergattung und eine Schwankungstoleranz speichert, in der Einrichtung zum elektronischen Erfassen des Tageskurses den Tageskurs der Aktien- bzw. Wertpapiergattung erfaßt, in der Einrichtung zum Vergleichen den Tageskurs mit dem ersten Stopp-Kurs vergleicht und, wenn der Tageskurs niedriger als oder genauso groß wie der erste Stopp-Kurs ist, die Schritte des elektronischen Erfassens und Vergleichens wiederholt, anderenfalls in der Einrichtung zum elektronischen Speichern den Tageskurs als neuen Stopp-Kurs speichert, in der elektronischen Einrichtung zum elektronischen Erfassen den Tageskurs der Aktien- bzw. Wertpapiergattung elektronisch erfaßt und in der Einrichtung zum Vergleichen den Tageskurs mit dem neuen Stopp-Kurs vergleicht und, wenn der Tageskurs größer als der neue Stopp-Kurs ist, die zuletzt genannten Schritte des elektronischen Speicherns, elektronischen Erfassens und Vergleichens des Tageskurses wiederholt, wenn der Tageskurs niedriger als der neue Stopp-Kurs ist, aber innerhalb der Schwankungstoleranz liegt, den Stopp-Kurs beibehält und die letztgenannten Schritte des elektronischen Erfassens und Vergleichens des Tageskurses wiederholt, und, wenn der Tageskurs kleiner als der neue Stopp-Kurs ist und nicht innerhalb der Schwankungstoleranz liegt, einen Hinweis zum Verkauf der Aktien- bzw. Wertpapiergattung ausgibt. Die Festlegung der einzelnen Bedingungen, wie erster Stopp-Kurs, Schwankungstoleranz etc. kann für jeden Anleger für jeden Kauf individuell vereinbart werden, d. h. auch für die gleiche Wertpapiergattung können unterschiedliche Überwachungskriterien für unterschiedliche Stückelungen festgelegt werden.

Die in der vorstehenden Beschreibung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Verfahren zur Sicherung von Kursgewinnen von Aktien- oder Wertpapieranlegern unter Verwendung eines Computers, das die folgenden Schritte umfaßt:
a) elektronisches Speichern eines ersten Stopp-Kurses für eine gekaufte Aktien- oder Wertpapiergattung und einer Schwankungstoleranz,
b) elektronisches Erfassen des Tageskurses der Aktien- bzw. Wertpapiergattung,
c) Vergleich des Tageskurses mit dem ersten Stopp-Kurs und,
wenn der Tageskurs niedriger als oder genauso groß wie der erste Stopp-Kurs ist, nochmaliger Durchlauf beginnend mit Schritt b), anderenfalls
a') elektronisches Speichern des Tageskurses als neuen Stopp-Kurs,
b') elektronisches Erfassen des Tageskurses der Aktien- bzw. Wertpapiergattung,
c') Vergleich des Tageskurses mit dem neuen Stopp-Kurs und,
wenn der Tageskurs größer als der neue Stopp-Kurs ist, nochmaliger Durchlauf beginnend mit Schritte a') bis c'),
wenn der Tageskurs niedriger als der neue Stopp-Kurs ist, aber innerhalb der Schwankungstoleranz liegt, Beibehalten des Stopp-Kurses und nochmaliger Durchlauf beginnend mit Schritt b'), und,
wenn der Tageskurs kleiner als der neue Stopp-Kurs ist und nicht innerhalb der Schwankungstoleranz liegt, Ausgabe eines Hinweises zum Verkauf der Aktien- bzw. Wertpapiergattung.

2. Verfahren nach Anspruch 1, **dadurch gekennzeichnet, daß** die Schwankungstoleranz ein Absolutwert ist.

3. Verfahren nach Anspruch 1, **dadurch gekennzeichnet, daß** die Schwankungstoleranz ein Relativwert ist.

4. Verfahren nach einem der vorangehenden Ansprüche, **dadurch gekennzeichnet, daß** der Tageskurs über eine Tastatur eingegeben wird.

5. Verfahren nach einem der Ansprüche 1 - 3, **dadurch gekennzeichnet, daß** der Tageskurs von einem Datenträger eingelesen wird.

6. Verfahren nach einem der Ansprüche 1 - 3, **dadurch gekennzeichnet, daß** der Tageskurs über eine Datenfernübertragungseinrichtung oder einen Internet-Zugang eingelesen wird.

7. Verfahren nach einem der vorangehenden Ansprüche, **dadurch gekennzeichnet, daß** zusätzlich eine Spekulationsfrist elektronisch gespeichert und der Hinweis zum Verkauf der Aktien- bzw. Wertpapiergattung nur unter der zusätzlichen Bedingung, daß sich anhand eines Zeitvergleiches ein Ablauf der Spekulationsfrist ergeben hat, ausgegeben wird.

8. Verfahren nach einem der Ansprüche 1 - 6, **dadurch gekennzeichnet, daß** zusätzlich eine Spekulationsfrist und eine Größe, die die Beachtung bzw. Nichtbeachtung der Spekulationsfrist repräsentiert, elektronisch gespeichert werden und, wenn die Größe die Beachtung der Spekulationsfrist repräsentiert, der Hinweis zum Verkauf der Aktien- bzw. Wertpapiergattung nur unter der zusätzlichen Bedingung, daß sich anhand eines Zeitvergleiches ein Ablauf der Spekulationsfrist ergeben hat, ausgegeben wird.

9. Verfahren nach einem der vorangehenden Ansprüche, **dadurch gekennzeichnet, daß** der Hinweis zum Verkauf der Aktien- bzw. Wertpapiergattung per Telefax oder per E-Mail über das Internet an den Aktien- bzw. Wertpapieranleger ausgegeben wird.

10. Verfahren nach einem der Ansprüche 1 - 8, **dadurch gekennzeichnet, daß** gleichzeitig mit dem Hinweis zum Verkauf der Aktien- bzw. Wertpapiergattung ein vorgefertigter Verkaufsauftrag an eine Bank bzw. Fondgesellschaft über einen Drucker ausgegeben wird.

11. Verfahren nach Anspruch 10, **dadurch gekennzeichnet, daß** gleichzeitig mit dem Hinweis zum Verkauf der Aktien- bzw. Wertpapiergattung eine schriftliche Vereinbarung zwischen dem Aktien- bzw. Wertpapieranleger und einer Anlageberaterfirma ausgegeben wird.

12. Verfahren nach Anspruch 11, **dadurch gekennzeichnet, daß** gleichzeitig mit dem Hinweis zum Verkauf der Aktien- bzw. Wertpapiergattung eine schriftliche Honorarvereinbarung zwischen dem Aktien- bzw. Wertpapieranleger und der Anlageberaterfirma ausgegeben wird.

13. Verfahren nach einem der vorangehenden Ansprüche, **dadurch gekennzeichnet, daß** zusätzlich eine Tageskursuntergrenze elektronisch gespeichert wird und in dem Schritt c) zusätzlich ein Vergleich des Tageskurses mit der Tageskursuntergrenze durchgeführt und, wenn der Tageskurs kleiner als die Tageskursuntergrenze ist, ein Hinweis zum Notverkauf der Aktien- bzw. Wertpapiergattung ausgegeben wird.

14. Computerprogramm mit Programmcode-Mitteln, um ein Verfahren gemäß einem der vorangehenden Ansprüche durchzuführen, wenn das Programm auf einem Computer ausgeführt wird.

15. Computerprogramm mit Programmcode-Mitteln nach Anspruch 14, die auf einem computerlesbaren Datenträger gespeichert sind.
